# FASCICULE DE BREVET EUROPEEN

(11) **EP 2 948 370 B1**
(45) Date de publication et mention de la délivrance du brevet: **14.11.2018**
(21) Numéro de dépôt: 14701118.3
(22) Date de dépôt: 22.01.2014
(51) Int. Cl.: B64D 11/06

(54) **SYSTÈME DE FIXATION D'UN SIÈGE D'AÉRONEF ET SIÈGE D'AÉRONEF COMPORTANT UN TEL SYSTÈME**
FLUGZEUGSITZBEFESTIGUNGSSYSTEM SOWIE SITZ MIT EINER DERARTIGEN BEFESTIGUNG
AIRCRAFT SEAT ATTACHMENT SYSTEM AND SEAT COMPRISING SUCH A SYSTEM

(30) Priorité: 22.01.2013 FR 1350552
(43) Date de publication de la demande: 02.12.2015
(73) Titulaire: Attax, 78420 Carrières sur Seine (FR)
(72) Inventeur: DAVOUST, Stéphane, 37250 Veigne (FR)
(74) Mandataire: Lavoix
(86) Numéro de dépôt international: PCT/EP2014/051264
(87) Numéro de publication internationale: WO 2014/114680

(56) Documents cités:
- EP-A1- 0 053 923
- EP-A1- 1 762 490
- US-A1- 2006 104 740
- US-B1- 8 292 224

## Description

La présente invention concerne un système de fixation d'un siège d'aéronef et un siège comportant au moins un tel système.

On connaît déjà dans l'état de la technique, par exemple du document US 8 292 224 B1, de nombreux systèmes de fixation de ce type qui comportent généralement une embase reliée au siège et permettant d'assurer sa fixation.

Cette embase comporte alors des moyens d'accrochage par exemple dans un rail de fixation de l'aéronef.

Ces moyens sont par exemple déplaçables entre une position de montage/démontage et une position d'accrochage du système de fixation dans le rail, par l'intermédiaire d'un levier de manoeuvre articulé sur l'embase et manoeuvrable par un opérateur de montage/démontage.

Ainsi par exemple le levier de manoeuvre est articulé à une extrémité, sur l'embase et est déplaçable par l'opérateur, entre une position escamotée de montage/démontage et une position active d'accrochage du système et donc du siège sur le rail et donc les reste de l'aéronef.

Dans cette position active d'accrochage, des moyens par exemple en forme de crochet de l'extrémité correspondante du levier, c'est-à-dire l'extrémité de celui-ci opposée à celle articulée sur l'embase, coopèrent avec des moyens complémentaires de retenue en position de verrouillage de ce levier sur l'embase, pour verrouiller le siège en position.

Ces moyens de retenue sont alors portés par exemple par l'embase et sont associés à des moyens de déblocage, permettant à l'opérateur de déverrouiller le système et donc le siège.

Ainsi par exemple ces moyens de retenue sont déverrouillables par l'opérateur à l'aide par exemple d'un outil approprié.

Différents modes de réalisation et différentes formes de ces moyens ont été proposés.

Cependant tous ces systèmes présentent un même inconvénient qui est celui de ne pas assurer et garantir notamment à l'opérateur, que le système est dans l'une ou l'autre de ses positions stables, à savoir en position de montage/démontage ou en position d'accrochage.

En effet rien dans les systèmes de l'état de la technique n'indique à l'opérateur de montage/démontage que le système de fixation se trouve positivement dans telle ou telle position.

Ceci se traduit alors par une incertitude pour l'opérateur ce qui lui impose des contrôles complémentaires pour vérifier l'état du système.

Le but de l'invention est donc de résoudre ces problèmes.

A cet effet l'invention a pour objet un système de fixation d'un siège d'aéronef sur le reste de celui-ci selon la revendication 1.

Suivant d'autres caractéristiques du système selon l'invention, le système selon l'invention comprend une ou plusieurs des caractéristiques optionnelles des revendications 2 à 5.

Selon un autre aspect, l'invention a également pour objet un siège d'aéronef, caractérisé en ce qu'il comporte au moins un système de fixation tes que décrit précédemment.

L'invention sera mieux comprise à l'aide de la description qui va suivre donnée uniquement à titre d'exemple et faite en se référant aux dessins annexés, sur lesquels :
- la figure 1 représente une vue schématique de côté d'un système de fixation d'un siège d'aéronef ;
- la figure 2 représente une vue en perspective d'un levier de manoeuvre entrant dans la constitution d'un tel système ;
- la figure 3 représente une vue de détail de l'extrémité de ce levier avec une partie enlevée ; et
- la figure 4 représente une vue en coupe d'un tel levier.

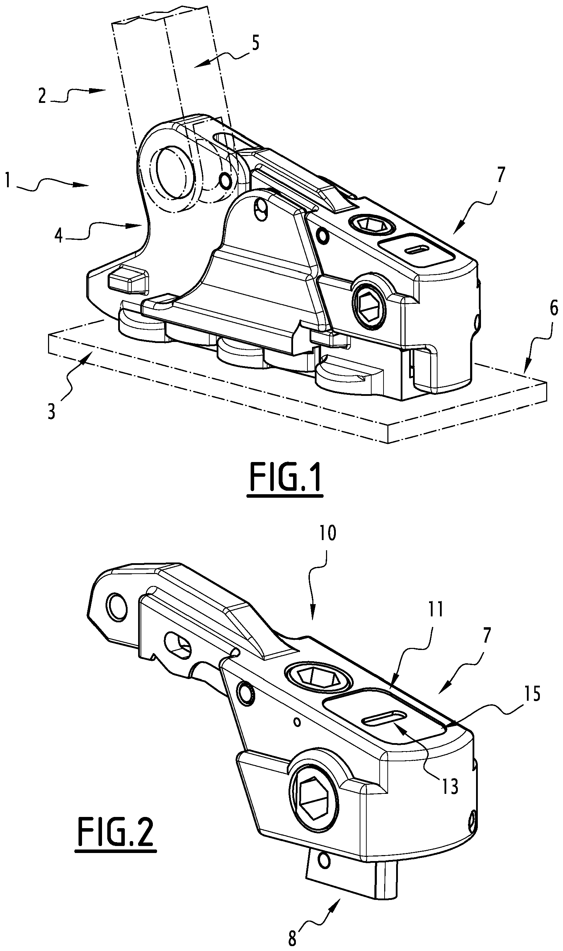

On a en effet illustré sur ces figures et en particulier sur la figure 1, un système de fixation d'un siège d'aéronef.

Le système est désigné par la référence générale 1 sur cette figure, tandis qu'une partie du siège est désignée par la référence générale 2 et le reste de l'aéronef est désigné par la référence générale 3.

De façon classique, le système de fixation comporte une embase désignée par la référence générale 4, reposant par exemple sur le plancher de l'aéronef et sur laquelle est par exemple fixé le siège et en particulier un pied de fixation 5 de celui-ci.

De façon classique également, l'embase 4 comporte des moyens d'accrochage par exemple dans un rail par exemple 6, du plancher de l'aéronef 3.

Ces moyens d'accrochage de l'embase et donc du siège sur le reste de l'aéronef, sont alors déplaçables de façon classique, par un levier de manoeuvre désigné par la référence générale 7 sur cette figure 1, déplaçable par exemple à la main par un opérateur de montage, entre des positions de verrouillage et de déverrouillage, permettant par exemple bloquer le système de fixation et donc le siège en position ou au contraire de le monter ou de le démonter.

Différents modes de réalisation de ce levier de manoeuvre ont déjà été proposés dans l'état de la technique.

Comme cela est illustré par exemple sur les figures 2, 3 et 4, dans le levier 7 entrant dans la constitution d'un système de fixation selon l'invention, une extrémité de ce levier est articulée sur l'embase 4, tandis que l'extrémité opposée de ce levier 7 est par exemple munie d'un loquet de verrouillage en forme de crochet, désigné par la référence générale 8.

Ce loquet de verrouillage 8 est alors adapté pour coopérer avec des moyens de retenue complémentaires du reste de l'embase, pour assurer le verrouillage en position de levier et donc du système de fixation et du siège, en position par exemple dans le rail 6 et donc par rapport au reste de l'aéronef.

On conçoit alors que ce levier 7 est monté de façon articulée sur le reste de l'embase 4 et est manoeuvrable par l'opérateur, pour provoquer un déplacement des moyens d'accrochage de l'embase 4 sur le rail 6 de l'aéronef entre des positions de verrouillage et de déverrouillage, permettant le blocage ou le montage et le démontage de celui-ci.

De plus le levier 7 est associé à des moyens permettant à l'opérateur de le bloquer en position ou de le débloquer.

Différents modes de réalisation de ces différents moyens ont déjà été décrits dans l'état de la technique.

Ceux-ci ne faisant pas l'objet de la présente invention, ils ne seront pas décrits dans le détail par la suite.

On notera simplement que dans le système de fixation selon l'invention, le levier de manoeuvre 7 comporte sur sa face supérieure, désignée par exemple par la référence générale 10 sur ces figures 2 à 4, des moyens formant indicateur visuel de la position de verrouillage/déverrouillage de l'embase par rapport au siège.

Ces moyens formant indicateur visuel sont désignés par la référence générale 11 sur ces figures et sont alors visibles par l'opérateur sur la face supérieure de ce levier par exemple.

En fait et comme cela est illustré sur ces figures, ces moyens formant indicateur se présentent par exemple sous la forme d'un coulisseau en forme de plaque ou autre, désigné par la référence générale 12, et monté déplaçable en regard d'une lumière par exemple 13, ménagée sur la face supérieure du levier 7.

Ce coulisseau 12 présente alors par exemple deux zones de couleurs différentes, telles que par exemple l'une d'une couleur verte et l'autre d'une couleur rouge, permettant en fonction de la zone de couleur en regard de la lumière, de faire percevoir à l'opérateur de montage si le système de fixation est en position de verrouillage positif comme c'est par exemple le cas lorsque la zone verte du coulisseau est en regard de la lumière ou en position de déverrouillage lorsque par exemple la zone rouge de celui-ci, est en regard de la lumière.

Bien entendu cette position du coulisseau est contrôlée par les moyens d'accrochage selon la position de ceux-ci.

Dans l'exemple décrit, ce coulisseau 12 est alors placé dans un évidement par exemple 14 prévu à l'extrémité du levier 7, cet évidement 14 étant obturé par un couvercle désigné par la référence générale 15, ce couvercle comportant la lumière 13 d'observation du coulisseau.

Bien entendu d'autres modes de réalisation de ces moyens peuvent être envisagés.

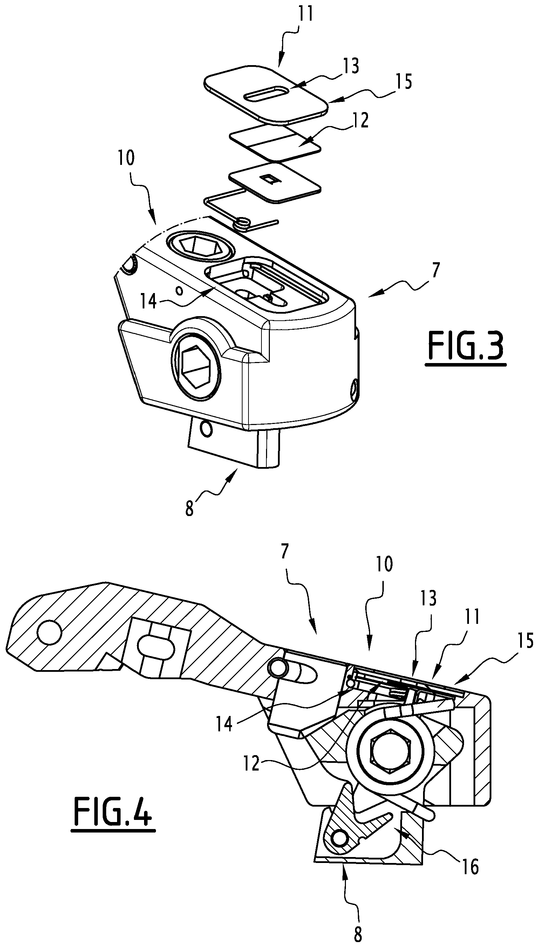

Comme cela est illustré sur la figure 4, le coulisseau 12 peut alors être déplaçable en regard de la lumière 13, sous l'action par exemple de moyens à cames désignés par la référence générale 16 sur cette figure 4.

Ces moyens à cames sont par exemple associés au loquet de verrouillage 8 du levier, pour détecter lorsque celui-ci est en position de verrouillage positif ou au contraire en position de déverrouillage, afin de placer le coulisseau 12 dans l'une ou l'autre de ses positions et faire ainsi percevoir à l'opérateur, l'état de verrouillage ou de déverrouillage du système.

On conçoit alors que ce simple indicateur visuel permet d'indiquer de façon sûre et simple, à l'opérateur de montage, la position du système de fixation.

Il va de soi bien entendu que de très nombreux autres modes de réalisation de ces moyens peuvent être envisagés.

## Revendications

1. Système de fixation d'un siège d'aéronef sur le reste de celui-ci, du type comportant une embase (4) apte à être reliée au siège (5) et comportant des moyens d'accrochage dans un rail (6) de l'aéronef (3), déplaçables par un levier de manoeuvre (7) entre des positions de verrouillage et de déverrouillage, **caractérisé en ce que** le levier de manoeuvre (7) comporte des moyens (11) formant indicateur visuel de la position de verrouillage/déverrouillage des moyens d'accrochage de l'embase par rapport au reste de l'aéronef, les moyens (11) formant indicateur visuel étant montés déplaçables en regard d'une lumière (13) ménagée dans la face supérieure du levier (7) et étant montés dans un évidement (14) de l'extrémité du levier (7), cet évidement étant obturé par un couvercle (15) muni de la lumière (13).

2. Système de fixation selon la revendication 1, **caractérisé en ce que** les moyens (11) formant indicateur visuel comportent deux zones de couleurs différentes déplaçables en regard de la lumière (13) selon la position du système.

3. Système de fixation selon l'une quelconque des revendications précédentes, **caractérisé en ce que** les moyens formant indicateur visuel (11) sont déplaçables par des moyens à cames (16) associés au levier (7).

4. Système de fixation selon l'une quelconque des revendications précédentes, **caractérisé en ce que** les moyens (11) formant indicateur visuel comportent un coulisseau (12) déplaçable pour indiquer la position des moyens d'accrochage.

5. Système de fixation selon l'une quelconque des revendications précédentes, **caractérisé en ce que** les moyens (11) formant indicateur visuel sont prévus sur la face supérieure du levier.

6. Siège d'aéronef, **caractérisé en ce qu'**il comporte au moins un système de fixation selon l'une quelconque des revendications précédentes.

## Patentansprüche

1. System zur Fixierung des Sitzes eines Flugzeugs an den Rest desselben vom Typ, umfassend eine Basis (4), die ausgelegt ist, um mit dem Sitz (5) verbunden zu sein, und umfassend Mittel zur Befestigung in einer Schiene (6) des Flugzeugs (3), die durch einen Betätigungshebel (7) zwischen einer Verriegelungsposition und einer Entriegelungsposition verschiebbar sind, **dadurch gekennzeichnet, dass** der Betätigungshebel (7) Mittel (11) umfasst, die eine visuelle Anzeige der Verriegelungs-/Entriegelungsposition der Mittel zur Befestigung der Basis mit Bezug auf den Rest des Flugzeugs bilden, wobei die Mittel (11), die die visuelle Anzeige bilden, verschiebbar mit Bezug auf eine kleine Öffnung (13) montiert sind, die in der oberen Seite des Hebels (7) angebracht ist und in einer Aussparung (14) des Endes des Hebels (7) montiert sind, wobei diese Aussparung von einem Deckel (15) verschlossen ist, der mit der Öffnung (13) ausgestattet ist.

2. System zur Fixierung nach Anspruch 1, **dadurch gekennzeichnet, dass** die Mittel (11), die die visuelle Anzeige bilden, zwei Zonen mit verschiedenen Farben umfassen, die mit Bezug auf die kleine Öffnung (13) gemäß der Position des Systems verschiebbar sind.

3. System zur Fixierung nach einem beliebigen der vorhergehenden Ansprüche, **dadurch gekennzeichnet, dass** die Mittel, die die visuelle Anzeige (11) bilden, durch Nockenmittel (16), die mit dem Hebel (7) assoziiert sind, verschiebbar sind.

4. System zur Fixierung nach einem beliebigen der vorhergehenden Ansprüche, **dadurch gekennzeichnet, dass** die Mittel (11), die die visuelle Anzeige bilden, einen Schieber (12) umfassen, der verschiebbar ist, um die Position der Mittel zur Befestigung anzuzeigen.

5. System zur Fixierung nach einem beliebigen der vorhergehenden Ansprüche, **dadurch gekennzeichnet, dass** die Mittel (11), die die visuelle Anzeige bilden, auf der oberen Seite des Hebels vorgesehen sind.

6. Sitz eines Flugzeugs, **dadurch gekennzeichnet, dass** er mindestens ein System zur Fixierung nach einem der beliebigen vorhergehenden Ansprüche umfasst.

## Claims

1. A system for securing an aircraft seat to the rest of the aircraft, of the type comprising a base (4) linked to the seat (5) and comprising means for fastening to a rail (6) of the aircraft (3), which can be moved by an operating lever (7) between locked and unlocked positions, **characterized in that** the operating lever (7) comprises means (11) forming a visual indicator of the locked/unlocked position of the means for fastening the base with respect to the rest of the aircraft, the visual indicator-forming means (11) being mounted movably while facing to an aperture (13) formed in the upper face of the lever (7) being mounted in a recess (14) of the end of the lever (7), that recess being closed off by a cover (15) provided with the aperture (13).

2. The securing system according to any one of claims 2 or 3, **characterized in that** the visual indicator-forming means (11) include two zones of different colors movable while facing to the aperture (13) depending on the position of the system.

3. The securing system according to any one of the preceding claims, **characterized in that** the visual indicator-forming means (11) are movable by cam means (16) associated with the lever (7).

4. The securing system according to any one of the preceding claims, **characterized in that** the visual indicator-forming means (11) include a slide (12) movable to indicate the position of the fastening means.

5. The securing system according to any one of the preceding claims, **characterized in that** the visual indicator-forming means (11) are provided on the upper face of the lever.

6. An aircraft seat, **characterized in that** it includes at least one securing system according to any one of the preceding claims.
